# EUROPEAN PATENT SPECIFICATION

(11) **EP 3 264 027 B1**
(45) Date of publication and mention of the grant of the patent: **18.09.2019**
(21) Application number: 16772412.9
(22) Date of filing: 18.03.2016
(51) Int. Cl.: G01B 5/28, G01B 5/20

(54) **SHAPE MEASUREMENT DEVICE**
FORMMESSVORRICHTUNG
DISPOSITIF DE MESURE DE FORME

(30) Priority: 31.03.2015 JP 2015072599; 31.03.2015 JP 2015072601
(43) Date of publication of application: 03.01.2018
(73) Proprietor: Tokyo Seimitsu Co., Ltd., Tokyo 192-8515 (JP)
(72) Inventor: SEKIMOTO, Michihiro, Tsuchiura-city Ibaraki 300-0006 (JP); TAKANASHI, Ryo, Tsuchiura-city Ibaraki 300-0006 (JP); KIMURA, Hiroaki, Tsuchiura-city Ibaraki 300-0006 (JP); MASUTA, Hikaru, Tsuchiura-city Ibaraki 300-0006 (JP)
(74) Representative: Grünecker Patent- und Rechtsanwälte PartG mbB
(86) International application number: PCT/JP2016/058844
(87) International publication number: WO 2016/158530

(56) References cited:
- DE-A1- 4 219 694
- JP-A- H1 163 971
- JP-A- 2001 033 233
- JP-A- 2001 033 233
- JP-A- 2007 225 380
- JP-A- 2009 115 527
- JP-A- 2014 137 339
- JP-A- 2014 137 339
- JP-B2- 4 884 091

## Description

### Technical Field

The present invention relates to a shape measuring device, and more particularly to a shape measuring device (profilometer) capable of measuring roundness and surface roughness.

### Background Art

Conventionally, roundness measurement and surface roughness measurement may be performed in precision measurement of a columnar or cylindrical workpiece, and the roundness measurement and the surface roughness measurement are usually performed by separate measuring machines.

Meanwhile, PTL 1 provides a measuring machine configured such that both roundness measurement and surface roughness measurement can be performed with one measuring machine by changing an interval of sampling measurement data during the roundness measurement from that during the surface roughness measurement to reduce space, cost, and the like. DE 42 19 694 A1 relates to a probe for measuring distance. JP 2014 137 339 A relates to a shape detecting device. JP 2001 033 233 A relates to a method for testing tubular and bar-like objects.

### Citation List

### Patent Literature

PTL 1: Japanese Patent Application Laid-Open No. 2007-155696

### Summary of Invention

### Technical Problem

Unfortunately, in PTL 1, roundness measurement and surface roughness measurement are performed as completely independent measurements, and PTL 1 does not disclose that data acquired by each measurement are mutually and efficiently used between the roundness measurement and surface roughness measurement.

The present invention is made in light of the above-mentioned circumstances, and has a first object to provide a shape measuring device capable of efficiently using data acquired by roundness measurement for surface roughness measurement to reduce a measurement workload and of improving measurement efficiency and the like. The present invention also has a second object to provide a shape measuring device capable of improving measurement efficiency of roundness measurement and surface roughness measurement, and of improving measurement accuracy and the like by effectively and mutually using data acquired by each of the roundness measurement and the surface roughness measurement for roundness measurement data and surface roughness measurement data.

### Solution to Problem

A shape measuring device to achieve the first object of the present invention includes: roundness measuring means configured to perform roundness measurement for a measuring object having a columnar or cylindrical shape; surface roughness measuring means configured to perform surface roughness measurement for the measuring object; and measurement conditions setting means configured to set measurement conditions in surface roughness measurement by the surface roughness measuring means based on data acquired by the roundness measurement for the measuring object by the roundness measuring means.

According to the present aspect, because measurement conditions in the surface roughness measurement are set on the basis of data acquired by roundness measurement, a burden on an operator to set the measurement conditions is reduced, and measurement can be performed in accordance with appropriate measurement conditions without depending on operator's experience.

A shape measuring device according to another aspect of the present invention, may further include a detector configured to be relatively rotated in a circumferential direction of the measuring object while being in contact with the measuring object through a stylus, and to detect displacement of the stylus, wherein the measurement conditions setting means sets a sampling interval when detection signals from the detector are sampled in surface roughness measurement by the surface roughness measuring means.

A shape measuring device according to yet another aspect of the present invention, may further include a detector configured to be relatively rotated in the circumferential direction of the measuring object while being in contact with the measuring object through a stylus, and to detect displacement of the stylus, wherein the measurement conditions setting means sets a cutoff value for extracting roughness components corresponding to surface roughness of the measuring object by applying filter processing to detection signals from the detector in surface roughness measurement by the surface roughness measuring means.

In a shape measuring device according to yet another aspect of the present invention, data acquired by the roundness measuring means and data acquired by the surface roughness measuring means may be stored in one data file.

A shape measuring device to achieve the second object of the present invention, the shape measuring device which measures a measuring object having a columnar or cylindrical shape, and includes: a rotational moving unit configured to relatively rotate the measuring object in a circumferential direction of the measuring object; a first measurement unit configured to perform roundness measurement of the rotating measuring object; and a second measurement unit configured to perform surface roughness measurement of the measuring object at a position opposite to the first measurement unit in the circumferential direction, wherein the roundness measurement by the first measurement unit and the surface roughness measurement by the second measurement unit are simultaneously performed.

According to the present aspect, because roundness measurement and surface roughness measurement can be simultaneously performed, measurement efficiency is improved.

In a shape measuring device according to another aspect of the present invention, the first measurement unit performs the roundness measurement in a state where the first measuring unit is in contact with the measuring object through a first stylus while being relatively rotated in the circumferential direction of the measuring object, based on detection signals acquired by detecting displacement of the first stylus, the second measurement unit performs the surface roughness measurement at a position opposite to a contact position between the first stylus and the measuring object in the circumferential direction, in a state where the second measurement unit is in contact with the measuring object through a second stylus while being relatively rotated in the circumferential direction of the measuring object, based on detection signals acquired by detecting displacement of the second stylus, and the shape measuring device further comprises processing means configured to eliminate a disturbance signal caused by a disturbance from the detection signals of the first measurement unit and the detection signals of the second measurement unit, based on comparison between the detection signals of the first measurement unit and the detection signals of the second measurement unit. It is possible to eliminate a disturbance signal which are caused by a disturbance mutually from each of detection signals from a first detector and detection signals from a second detector, so that measurement accuracy is improved.

In the shape measuring device according to the other aspect of the present invention, the processing means eliminates the disturbance signal when the disturbance signal is larger than a predetermined threshold value, and does not eliminate the disturbance signal when the disturbance signal is not larger than the predetermined threshold value. When a disturbance is not larger than the predetermined threshold value, elimination of a disturbance signal is stopped to enable reduction in measurement time.

In the shape measuring device according to the other aspect of the present invention, a curvature radius of a tip of the first stylus in the first measurement unit may be configured to be larger than a curvature radius of a tip of the second stylus in the second measurement unit.

In a shape measuring device according to yet another aspect of the present invention, data on the roundness measurement acquired by the first measurement unit and data on the surface roughness measurement acquired by the second measurement unit may be stored in one data file.

### Advantageous Effects of Invention

According to the shape measuring device to achieve the first object of the present invention, data acquired by roundness measurement is effectively used for surface roughness measurement, whereby a measurement workload can be reduced and measurement efficiency can be improved. In addition, according to the shape measuring device to achieve the second object of the present invention, measurement efficiency of roundness measurement and surface roughness measurement can be improved, and measurement accuracy also can be improved by effectively and mutually using data acquired by each of the roundness measurement and the surface roughness measurement for roundness measurement data and surface roughness measurement data.

### Brief Description of Drawings

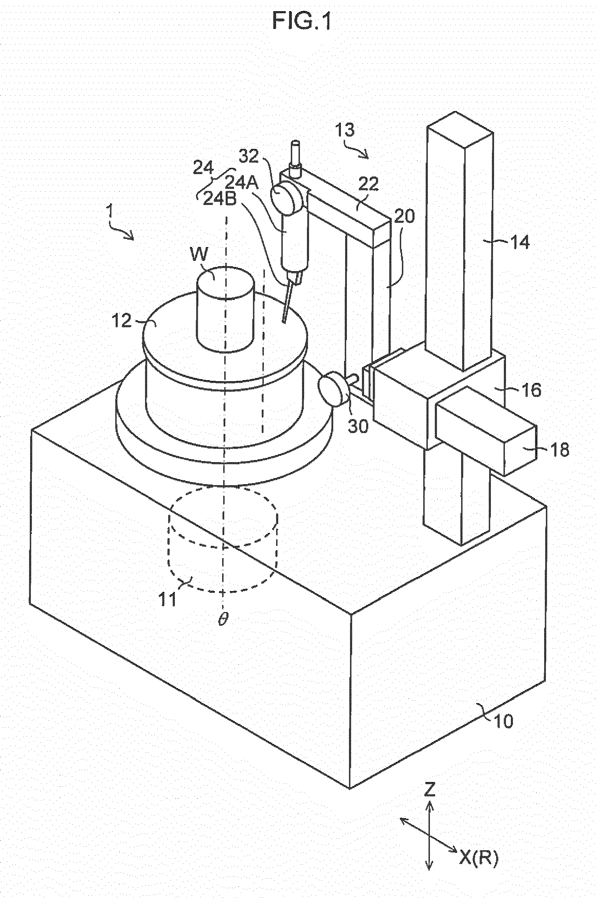

Figure 1 is a perspective view illustrating general structure of a
   roundness measuring device.

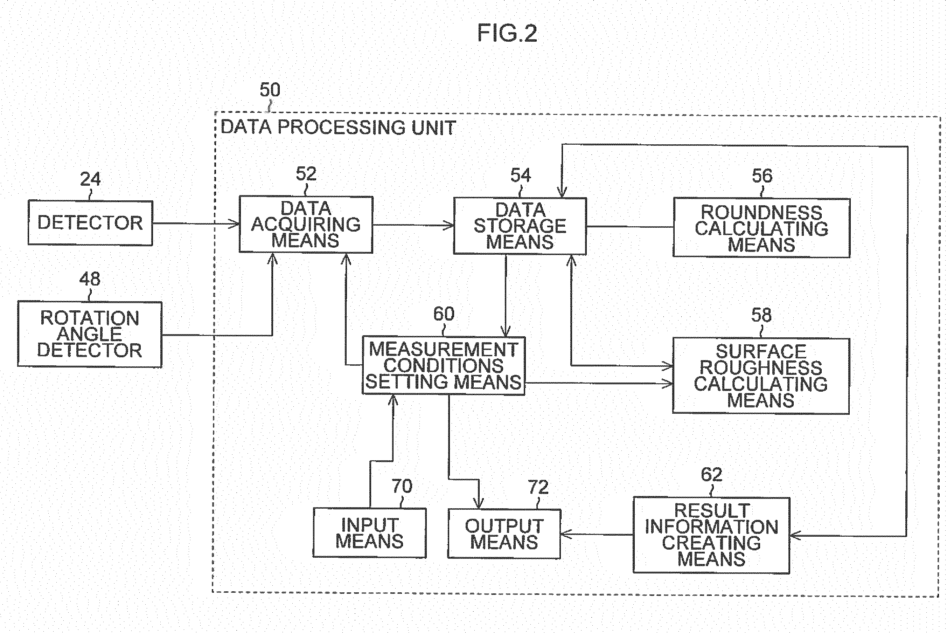

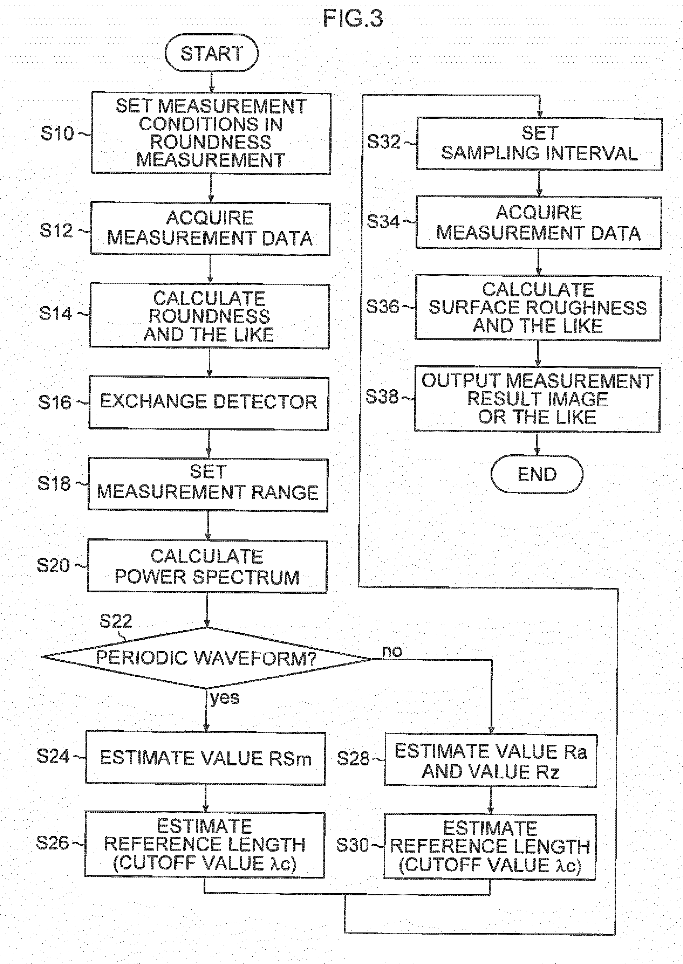

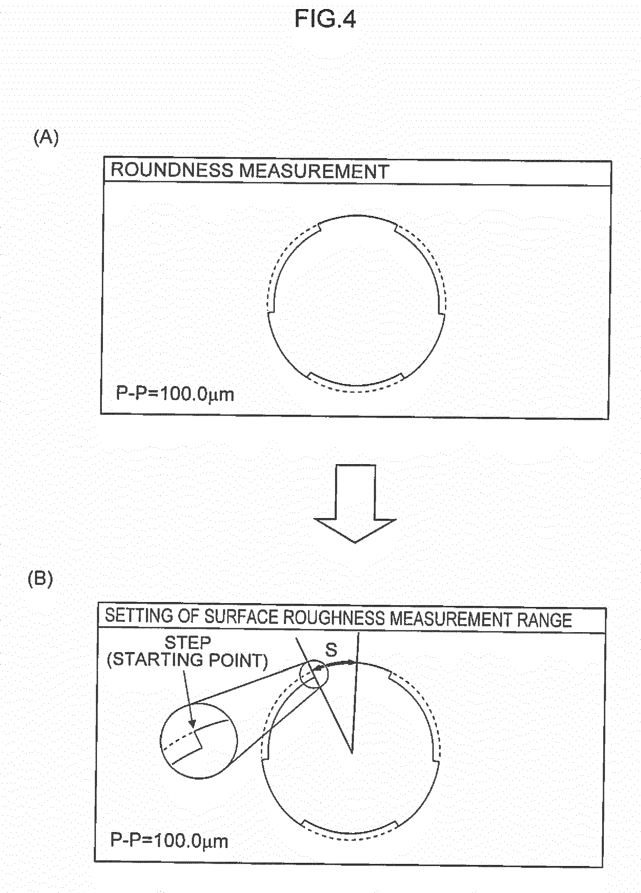

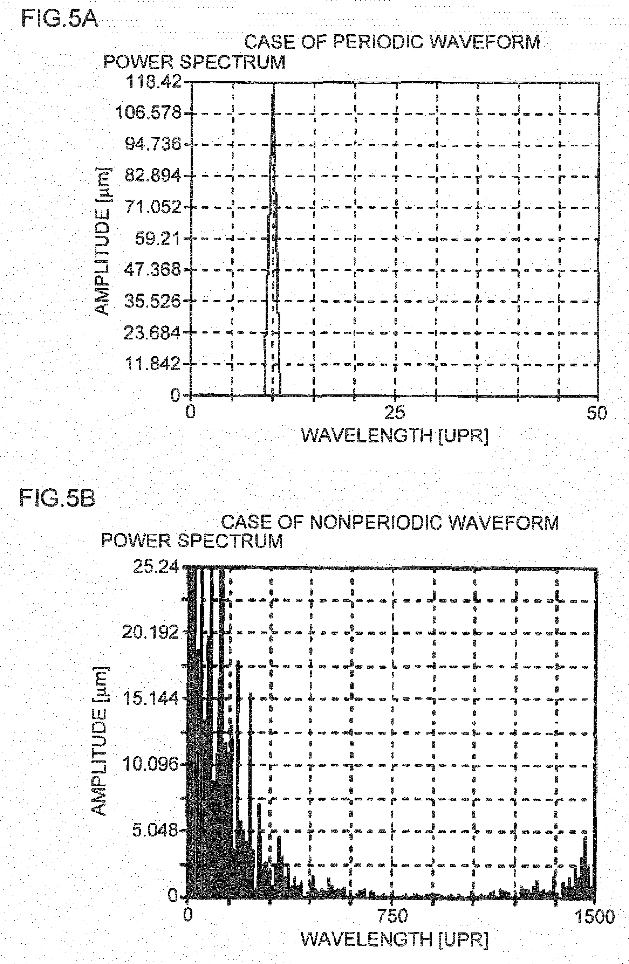

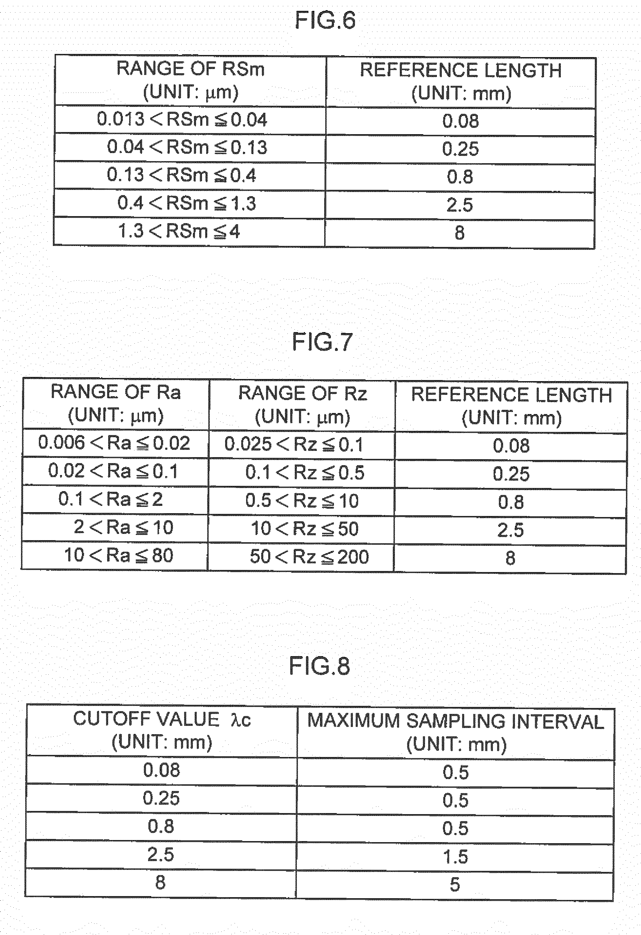

Figure 2 is a block diagram illustrating a schematic configuration of a data processing unit configured to perform data processing and the like in a shape measuring device.Figure 3 is a flowchart illustrating a series of measurement procedures of roundness measurement and surface roughness measurement.Figure 4 is an illustration used for description of designation of a measurement range.Figure 5A illustrates a power spectrum of a sectional profile curve of a workpiece (in the case of a periodic waveform).Figure 5B illustrates a power spectrum of a sectional profile curve of a workpiece (in the case of a nonperiodic waveform).Figure 6 shows a relationship between a value RSm and a sampling interval.

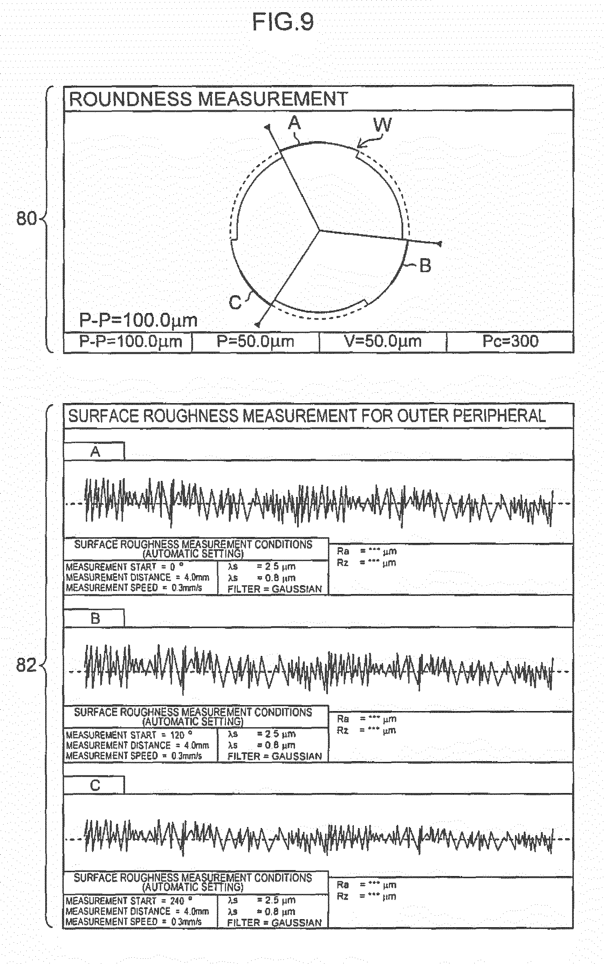

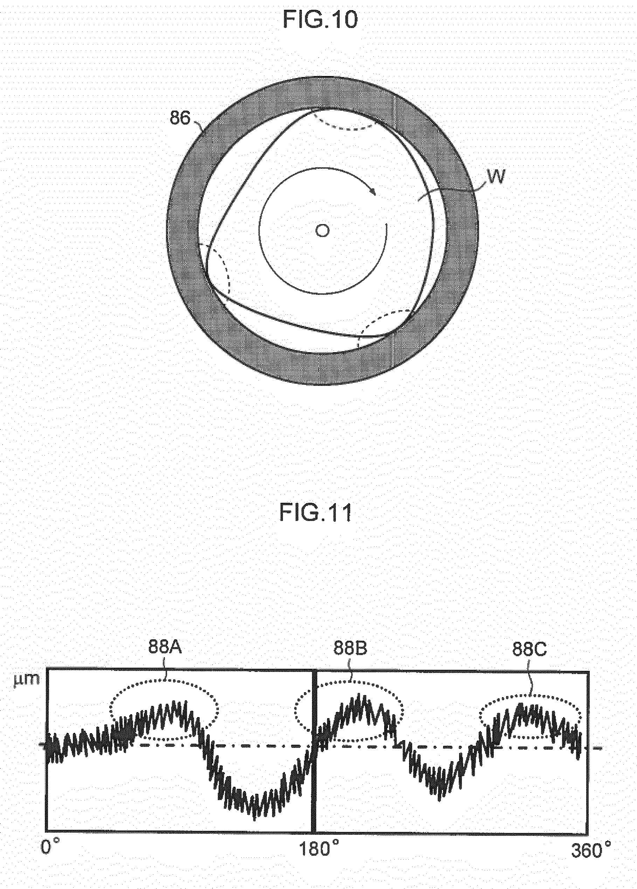

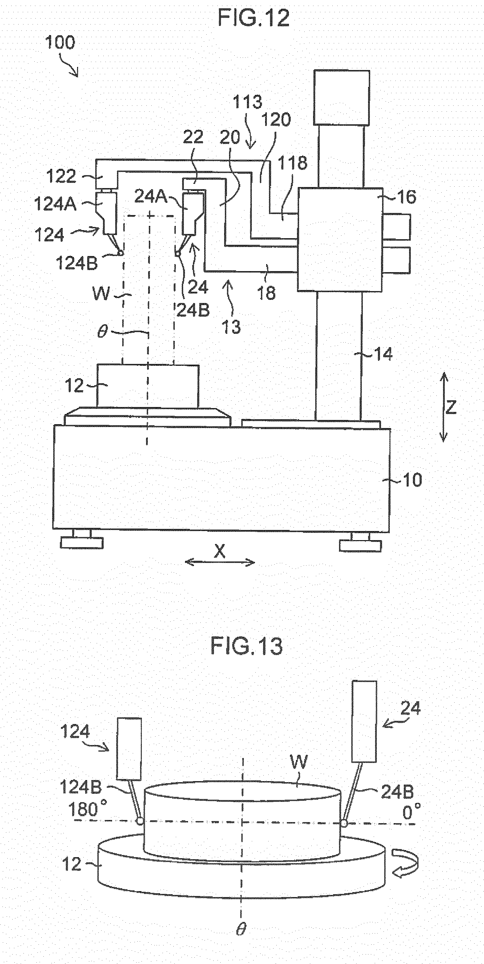

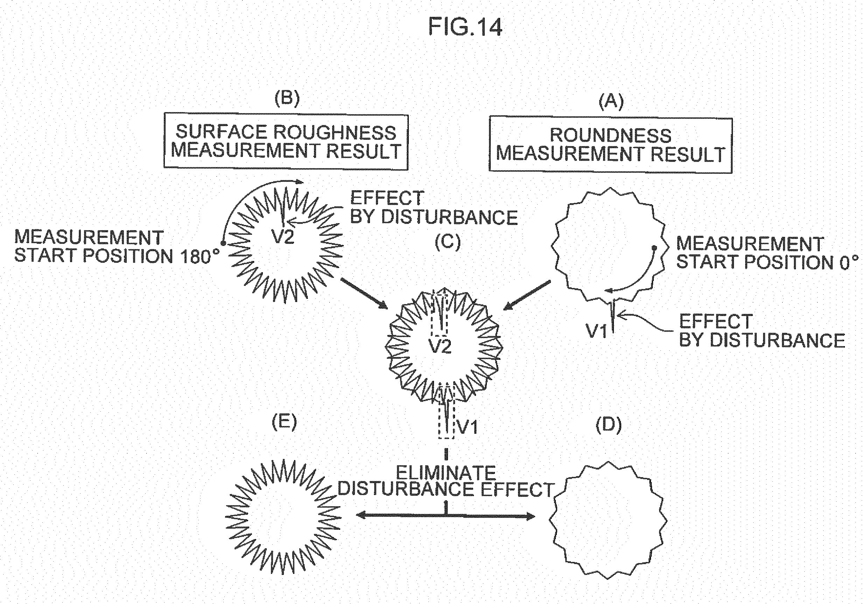

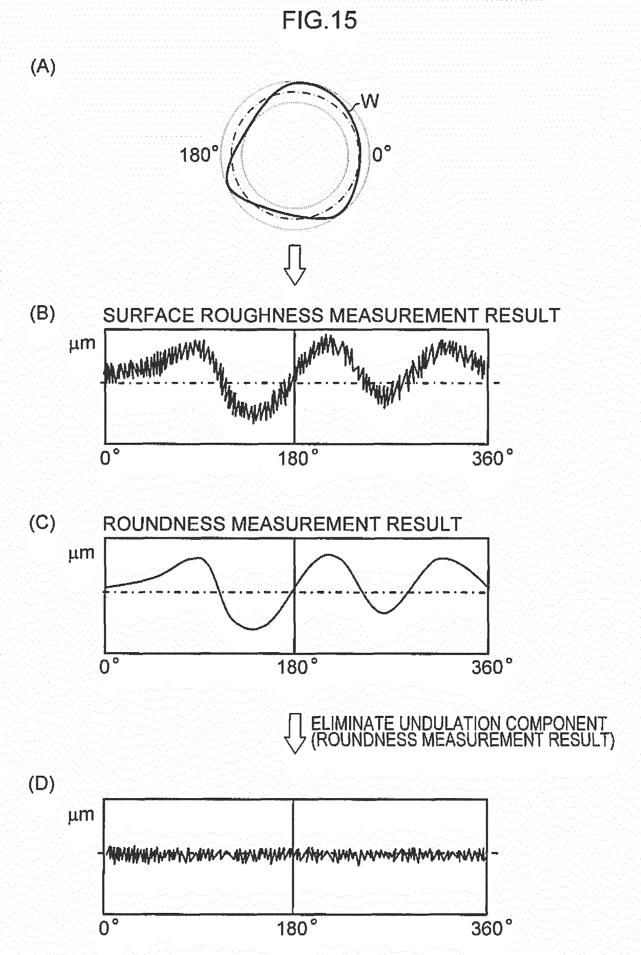

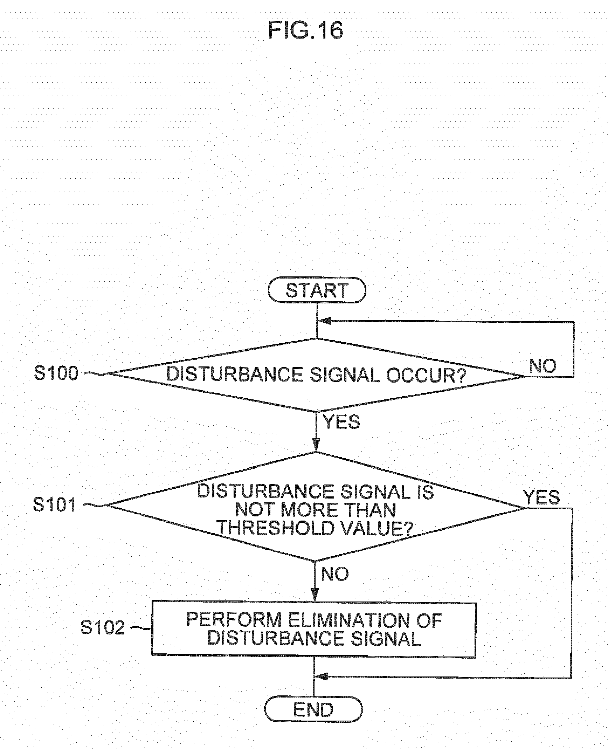

Figure 7 shows a relationship among a value Ra, a value Rz, and a sampling interval.Figure 8 shows a relationship between a cutoff value λc and a sampling interval.Figure 9 shows an example of a measurement result image.Figure 10 is an illustration to describe an effect.Figure 11 is an illustration to describe an effect.Figure 12 is a front view illustrating a structure of a shape measuring device of a second embodiment. Figure 13 is an illustration to describe an effect.Figure 14 is an illustration to describe an effect.Figure 15 is an illustration to describe an effect.Figure 16 is a flowchart illustrating a modification of the second embodiment.

### Description of Embodiments

Hereinafter, preferable embodiments of the present invention will be described in detail with reference to accompanying drawings.

Figures 12 to 16 show embodiments of the present invention. Figures 1 to 11 show further examples which are not encompassed in the scope of the invention, even if they are named "embodiments" in the corresponding parts of the description. The scope of protection is defined by the claims.

Figure 1 is a perspective view illustrating general structure of a shape measuring device.

A shape measuring device 1 illustrated in Figure 1 has a structure of a roundness measuring device that measures roundness. In the shape measuring device 1, a base 10 in a pedestal-like shape for supporting the whole of the device is disposed in its lower end portion, and a stage 12 rotatable around a rotation axis (θ-axis) arranged along a vertical direction (Z-axial direction) is provided on the top face of the base 10. On the top face of the stage 12, a workpiece W that has a columnar or cylindrical shape is mounted as a measuring object. The workpiece W is mounted such that a center axis of the workpiece W is concentric with the rotation axis of the stage 12.

Inside the base 10, a rotational driving unit 11 is provided that rotationally drives the stage 12 and includes a motor or the like coupled to the stage 12.

With the rotational driving unit 11, the workpiece W mounted on the stage 12 is rotated around the θ-axis together with the stage 12.

The stage 12 may be manually rotated. In addition, the stage 12 may be movable in a side-to-side direction and a fore-and-aft direction that are perpendicular to the θ-axis and are orthogonal to each other by rotational operation of a knob, for example.

A detector 24 (measurement stylus) is supported on the top face of the base 10 through a detector supporting mechanism 13 including a column 14, a carriage 16, a radial moving arm 18, a turning arm 20, and a detector holder 22.

The detector 24 includes a stylus 24B that extends like a rod from a lower end of a cylindrical detector body 24A, and a displacement detector (not illustrated) that is provided inside the detector body 24A and outputs displacement of the stylus 24B detected by a differential transformer or the like as an electric signal (detection signal), for example. The stylus 24B is supported by the detector body 24A such that an axis of the stylus 24B can be displaced in a direction (displacement direction) orthogonal to the axis of the stylus 24B in a single plane. The stylus 24B is also urged toward one direction (urging direction) in the displacement direction by a spring or the like. During measurement, the tip (tip ball) of the stylus 24B is pressed against a peripheral face of the workpiece W in the urging direction to maintain contact.

Regarding the detector supporting mechanism 13, the column 14 extending along the vertical direction is erected on the right side of the stage 12 on the top face of the base 10. On the column 14, the carriage 16 movable in the vertical direction along the column 14 is supported. While the carriage 16 is moved in the vertical direction by driving of a motor, for example, the carriage 16 may be manually moved by rotational operation of a knob or the like, instead.

With the movement mechanism of the carriage 16 in the vertical direction, the detector supporting mechanism 13 supports the detector 24 such that the position of the detector 24 can be changed in the vertical direction.

In the carriage 16, the radial moving arm 18 extending in a radial direction is supported to be movable in the radial direction. While the radial moving arm 18 is moved in the radial direction by driving of a motor, for example, the radial moving arm 18 may be manually moved by rotational operation of a knob or the like, instead.

With the movement mechanism of the radial moving arm 18 in the radial direction, the detector supporting mechanism 13 supports the detector 24 such that the position of the detector 24 can be changed in the radial direction.

Here, the radial direction indicates a radial direction (R-axis direction) around the rotation axis (θ-axis) of the stage 12, and a direction in which the radial moving arm 18 is moved is the side-to-side direction (X-axis direction).

One end (base end) of the turning arm 20 is coupled to the end part (left end part) on the left side (on a stage 12 side) of the radial moving arm 18 in a manner turnable around a turning axis (pivot) which is along the radial direction. The turning arm 20 is fixed to the radial moving arm 18 with a screw. Loosening the screw by rotational operation of a knob 30 enables the turning arm 20 to turn around the turning axis so that the direction of the turning arm 20 can be changed.

With the turning mechanism of the turning arm 20, the detector supporting mechanism 13 supports the detector 24 such that a turning angle of the detector 24 around the turning axis along the radial direction can be changed.

A base end part of the detector holder 22 extending in the radial direction is fixed to a leading end part of the turning arm 20,

The detector 24 is attached to a leading end part of the detector holder 22 in a detachable manner by rotational operation of a knob 32.

The detector holder 22 fastens a base end side of the detector 24 such that a leading end side (a side on which the stylus 24B is provided) of the detector 24 is oriented toward the axis line of the turning axis of the turning arm 20 and such that the axis line of the detector body 24A is parallel to the axis line of turning arm 20.

The detector holder 22 can firmly hold the detector 24 and an attachment angle of the detector 24, that is, a rotation angle around the axis line of the detector body 24A, is changeable. This adjustment mechanism of the attachment angle of the detector 24 in the detector holder 22 enables to adjust the displacement direction and urging direction of the stylus 24B.

The shape measuring device I of Figure 1 is a workpiece-rotating type measuring device in which the detector 24 is relatively moved around a workpiece W in a circumferential direction, however, while the workpiece W is rotated. However, the shape measuring device may be a detector-rotating type measuring device in which the detector 24 is rotated and moved around a workpiece W.

Figure 2 is a block diagram illustrating a schematic configuration of a data processing unit 50 (not illustrated in Figure 1) configured to perform data processing and the like in the shape measuring device 1 described above.

The data processing unit 50 of the shape measuring device I is achieved, for example, by executing a predetermined program in a processor such as a personal computer or the like. The data processing unit 50 includes data acquiring means 52, data storage means 54, roundness calculating means 56, surface roughness calculating means 58, measurement conditions setting means 60, result information creating means 62, and the like as illustrated in Figure 2. In addition, the data processing unit 50 also includes input means 70 such as a keyboard through which an operator inputs various kinds of information, and output means 72 such as a monitor from which various kinds of information is output (e.g., displayed) to an operator.

The data acquiring means 52 is connected to the detector 24 and rotation angle detection means 48 (not illustrated in Figure 1) of the rotational driving unit 11 in Figure 1. The data acquiring means 52 acquires a displacement signal (detection signal) indicating displacement of the stylus 24B from the detector 24, and acquires a position signal (angle signal) indicating a rotation angle of the stage 12 from the rotation angle detection means 48.

While the stage 12, or the workpiece W, is rotated, the data acquiring means 52 detects that a workpiece W rotates by a predetermined angle variation on the basis of an angle signal from the rotation angle detector 48, and converts a value of the displacement signal (detection signal) from the detector 24 into a digital signal with Analog-to-digital conversion (A/D conversion) for each detection to sample the digital signal as displacement data. Here, the detector 24 is in contact with a peripheral face of the workpiece W through the stylus 24B.

Accordingly, the displacement data is sampled at an interval (a time interval or a rotation angle interval of the workpiece W) in which the workpiece W mounted on the stage 12 is rotated by a predetermined angle, as a sampling interval. The data storage means 54 sequentially stores data in which the sampled displacement data and rotation angles of the workpiece W (stage 12) are associated with each other, as measurement data.

The rotation angle of the workpiece W (stage 12) indicates a position of the workpiece W in the circumferential direction (a direction around the center axis of the workpiece W). The stage 12 may be rotated under control by the data processing unit 50 of the rotational driving unit 11 (motor), for example, or may be manually rotated, when measurement data is acquired.

The shape measuring device I of the present embodiment can perform roundness measurement and surface roughness measurement. The data acquiring means 52 acquires measurement data for roundness measurement and measurement data for surface roughness measurement for one workpiece W, and causes the data storage means 54 to store the data.

In comparison between the case of the roundness measurement and the case of the surface roughness measurement, in the case of the roundness measurement, the stylus 24B with a tip ball having a large curvature radius is used as the detector 24 and a sampling interval is set to a large value. In addition, a measurement range within which measurement data is acquired is set to a rotation angle range for one turn (360 degrees) of a workpiece W.

On the other hand, in the case of the surface roughness measurement, the stylus 24B with a tip ball having a small curvature radius is used as the detector 24 and a sampling interval is set to a small value. In addition, a measurement range within which measurement data is acquired is set to a predetermined rotation angle range (described below) of the workpiece W.

The roundness calculating means 56 calculates a value related to roundness of the workpiece W on the basis of the measurement data for roundness measurement stored in the data storage means 54.

For example, a value P-P is calculated as the value indicating roundness. The value P-P is a radius difference between two concentric geometric circles in the case where a distance between the two concentric geometric circles becomes the minimum, when a sectional profile curve of the workpiece W represented by the measurement data for roundness measurement stored in the data storage means 54 is put between the two concentric geometric circles.

In addition, a value P (peak height) being a maximum value of a deviation from a mean circle of the sectional profile curve of the workpiece W, a value V (bottom depth) being a minimum deviation, a value Pc (peak count) being the number of peaks indicated as displacement in a positive direction from the mean circle, and the like, are also calculated as values related to roundness.

Then, the data storage means 54 stores the calculation results described above as measurement result data on the roundness measurement.

The surface roughness calculating means 58 calculates a value related to surface roughness of the workpiece W on the basis of the measurement data for surface roughness measurement stored in data storage means 54.

For example, a roughness curve is acquired as a value (roughness parameter) indicating surface roughness. The roughness curve is acquired by eliminating components other than roughness component, such as noise components and undulation components, from the sectional profile curve of the workpiece W represented by the measurement data for surface roughness measurement stored in the data storage means 54. Then, a value Ra indicating an arithmetic mean roughness and a value Rz indicating a ten-point mean roughness, each of which is a roughness parameter representing surface roughness, are calculated on the basis of the roughness curve.

The data storage means 54 stores the calculation results described above as measurement result data on the surface roughness measurement.

The measurement conditions setting means 60 determines measurement conditions in each of the roundness measurement and the surface roughness measurement on the basis of data input through the input means 70, and measurement data and measurement result data stored in the data storage means 54. The measurement conditions setting means 60 then sets the corresponding measurement conditions to the data acquiring means 52 and the surface roughness calculating means 58 so that measurement is performed in accordance with the measurement conditions.

For example, as measurement conditions related to acquisition of measurement data in the data acquiring means 52, a measurement range of the workpiece W to be measured, that is, a measurement range (a rotation angle range of the workpiece W) in which measurement data (displacement data) is acquired, and a sampling interval are determined, for example. Then, the measurement conditions are set to the data acquiring means 52.

In addition, as measurement conditions related to calculation of surface roughness in the surface roughness calculating means 58, various cutoff values of filters (filter processing) for extracting roughness components from the sectional profile curve of the workpiece W represented by the measurement data are determined, for example. Then, the measurement conditions are set to the surface roughness calculating means 58.

In particular, the surface roughness measurement is performed after the roundness measurement is performed. And, measurement result data on the roundness measurement, that is, calculation results of the roundness calculating means 56 are referred to when setting of the measurement conditions in the surface roughness measurement.

The result information creating means 62 creates a measurement result image showing measurement results of the roundness measurement and the surface roughness measurement on the basis of measurement data and measurement result data (calculation result) on the roundness measurement and the surface roughness measurement of one workpiece W, stored in the data storage means 54, and outputs the measurement result image to the output means 72.

The measurement data and the measurement result data on the roundness measurement and the surface roughness measurement of the one workpiece W are placed into one data file as one associated information item, and are stored in the data storage means 54. The data storage means 54 in Figure 2 includes both a storage medium for temporarily storing data and a storage medium for data storage to semipermanently store data, and the data file containing the measurement data and measurement result data is stored in the storage medium for data storage.

Subsequently, a series of measurement procedures of roundness measurement and surface roughness measurement in the shape measuring device I described above will be described, and also details of processing in the data processing unit 50 of Figure 2 will be described.

Figure 3 is a flowchart illustrating the series of measurement procedures of roundness measurement and surface roughness measurement.

First, as prerequisite for measurement, a workpiece W which is a measuring object and has a columnar or cylindrical shape, is mounted on the stage 12 as illustrated in Figure 1, and the center axis of the workpiece W is set at a position substantially coinciding with the rotation axis (θ-axis) of the stage 12. Then, roundness measurement and surface roughness measurement of an outer peripheral face of the workpiece W are performed.

Here, of the roundness measurement and the surface roughness measurement, the roundness measurement is first performed.

In addition, when the measurement is started, the detector 24 in Figure 1 including the stylus 24B provided with a tip ball (tip) having a curvature radius that is suitable for the roundness measurement and that is at least larger than a curvature radius to be used in the surface roughness measurement is attached to the detector holder 22, and the tip ball of the stylus 24B is in contact with the outer peripheral face of the workpiece W. When a curvature radius of the tip ball of the stylus 24B is changed, any one of aspects of: exchanging the whole of the detector 24; exchanging the whole of the stylus 24B for the detector body 24A; and exchanging only the tip ball of the stylus 24B, may be used.

First, in step S10 of Figure 3, as measurement conditions in the roundness measurement, the measurement conditions setting means 60 sets a measurement range of the workpiece W to be measured, that is, a measurement range (a rotation angle range of the workpiece W) in which the data acquiring means 52 acquires measurement data from the detector 24, and a sampling interval at which measurement data is sampled.

Here, the rotation angle range is set to a rotation angle range of one turn (360 degrees) of the workpiece W, as the measurement range. The sampling interval is set to an interval in which the workpiece W is rotated by a predetermined angle, and is larger than an interval to be used in the surface roughness measurement, at least.

Next, in step S12 of Figure 3, while the stage 12 is rotated by the rotational driving unit 11, measurement data is acquired by the data acquiring means 52 in accordance with the measurement conditions set in step S10, and the acquired measurement data is stored in the data storage means 54 as the measurement data on the roundness measurement.

As described above, the measurement data shows data in which displacement data acquired by sampling displacement signals from the detector 24 and rotation angles of the workpiece W (stage 12) detected by the rotation angle detector 48 are associated with each other.

The data acquiring means 52 performs sampling of the displacement data at the sampling interval set in step S10 until a rotation angle of the workpiece W reaches the rotation angle for one turn (360 degrees).

As described above, the stage 12 may be rotated under control by the data processing unit 50 of the rotational driving unit 11 (motor), for example, or may be manually rotated.

Subsequently, in step S14 of Figure 3, as described above, the roundness calculating means 56 calculates the value P-P indicating roundness, the value P indicating a peak height, the value V indicating a bottom depth, the value Pc indicating a peak count, and the like, as values related to roundness of the workpiece W, on the basis of the measurement data on the roundness measurement stored in the data storage means 54 in step S12.

Then, the data storage means 54 stores the calculation results described above as measurement result data on the roundness measurement.

Up to this point, the roundness measurement is finished, and hereinafter processing proceeds to surface roughness measurement.

Upon proceeding to the surface roughness measurement, in steps S16 to S32 of Figure 3, measurement conditions in the surface roughness measurement are set in a state where the workpiece W remains mounted on the stage 12.

First, in step S16, an operator exchanges the detector 24 for a detector including the stylus 24B with a tip ball having a curvature radius that is suitable for the surface roughness measurement and is smaller than the curvature radius used in the roundness measurement, at least.

Next, in step S18 of Figure 3, the measurement conditions setting means 60 sets a measurement range in which the surface roughness measurement is performed, that is, a measurement range (a rotation angle range of the workpiece W) in which the data acquiring means 52 acquires measurement data from the detector 24, on the basis of the measurement data on the roundness measurement.

For example, the measurement conditions setting means 60 outputs a figure of the sectional profile curve of the workpiece W represented by the measurement data on the roundness measurement, as illustrated in Part (A) in Figure 4, and the value P-P that is the measurement result data on the roundness measurement, to the output means 72.

Referring to this screen, an operator designates a measurement range in the surface roughness measurement through the input means 70 by using a rotation angle range of the workpiece W or the like, such as a range indicated by a reference character S in Part (B) in Figure 4.

Further, when a workpiece W has steps (bumps) that are intentionally formed like the sectional profile curve in Figure 4, it is desirable that an operator designates a range without a step as a measurement range so that surface roughness is correctly evaluated. Particularly, in a case where surface roughness measurement is performed for a plurality of workpieces W each having the same shape, if a position of the step (bump) is designated as a starting point (one end point) of the measurement range S as illustrated in Part (B) in Figure 4, it is possible to perform the surface roughness measurement for the same part in the workpieces even when the workpieces W have different phases between the workpiece W and the stage 12 from each other.

The measurement range also can be designated by measuring a diameter (or a radius) of the workpiece W or by an operator's input of the measurement range through the input means 70, and then by calculating a distance of the measurement range (measurement length) and displaying the distance. When the measurement range is designated, a starting point of the measurement range and measurement length from the starting point may be designated, instead of designating a starting point of the measurement range and a rotation angle from the starting point.

Subsequently, in step S20 of Figure 3, the measurement conditions setting means 60 calculates a power spectrum of the sectional profile curve of the workpiece W on the basis of the measurement data on the roundness measurement. The power spectrum may be calculated by the roundness calculating means 56 as measurement result data on the roundness measurement, and stored in the data storage means 54.

Subsequently, in step S22 of Figure 3, the measurement conditions setting means 60 determines whether the sectional profile curve is a periodic waveform or a nonperiodic waveform on the basis of the power spectrum calculated in step S20.

In the case of a periodic waveform, the power spectrum has a large amplitude in each component corresponding to a cycle of the power spectrum. Thus, when there is a component with a large amplitude (an amplitude larger than a predetermined threshold value) like the graph of a power spectrum in Figure 5A, it is determined that the power spectrum is a periodic waveform, and the processing proceeds to step S24.

Meanwhile, when there is no component with a large amplitude (an amplitude larger than a predetermined threshold value) like the graph of a power spectrum in Figure 5B, it is determined that the power spectrum is a nonperiodic waveform, and the processing proceeds to step S28.

Whether the sectional profile curve is a periodic waveform or a nonperiodic waveform is information required to set measurement conditions in the surface roughness measurement. The information enables eliminating ambiguous determination in a visual check by an operator.

When it is determined that the sectional profile curve is a periodic waveform in step S22, in following step S24 of Figure 3, the measurement conditions setting means 60 estimates a value RSm that is a well-known roughness parameter and indicates a mean length of roughness curve elements, on the basis of the value Pc (peak count) stored in the data storage means 54 as the measurement result data on the roundness measurement.

That is, a length of the outer periphery of the workpiece W is calculated by using a radius of the workpiece W, and a length of one peak can be calculated by dividing the length of the outer periphery of the workpiece W by the value Pc. Then, because the value RSm is close to the length of one peak, the length of one peak can be set to an estimated value of the value RSm.

Subsequently, in step S26 of Figure 3, the measurement conditions setting means 60 estimates a reference length of roughness parameter on the basis of the value RSm estimated in step S24 and the correspondence table of Figure 6 (refer to JIS B 0633:2001) shown in Japanese Industrial Standards (JIS).

The correspondence table in Figure 6 shows a reference length for measuring the value RSm, as a value corresponding to the value RSm when the sectional profile curve is a periodic waveform.

Estimation of the reference length allows a cutoff value λc to be estimated as the same value of the reference length. The cutoff value λc is a cutoff value of a high-pass filter that is used when a roughness curve is created from the measurement data for surface roughness measurement stored in the data storage means 54, and indicates a cutoff value that can extract roughness components by eliminating undulation components from the sectional profile curve of the workpiece W through the high-pass filter.

The estimated cutoff value λc is set as a value to be used to calculate surface roughness and the like in the surface roughness calculating means 58.

Meanwhile, when it is determined that the sectional profile curve is a nonperiodic waveform in step S22 of Figure 3, in following step S28, the measurement conditions setting means 60 estimates a value Ra indicating an arithmetic mean roughness, and a value Rz indicating a ten-point mean roughness, each of which is a well-known roughness parameter, on the basis of the value P-P (roundness) stored in the data storage means 54 as the measurement result data on the roundness measurement.

That is, the value P-P indicates a radius difference between an inscribed circle and a circumscribed circle that are concentric with each other and acquired by respective circle methods, and the value P-P is close to the value Rz. Thus, the value P-P can be set as an estimated value of the value Rz. The value P-P in the measurement range set in step S18 may be calculated on the basis of the measurement data on the roundness measurement stored in the data storage means 54, to set the value P-P as an estimated value of the value Rz.

The value Ra is about 1/4 (one-fourth) (in the case of a triangular waveform) of the value Rz, and thus one-fourth of the value P-P can be set as an estimated value of the value Ra.

Subsequently, in step S30 of Figure 3, the measurement conditions setting means 60 estimates a reference length of roughness parameter on the basis of the value Ra and the value Rz, estimated in step S28, and the correspondence table in Figure 7 (refer to JIS B 0633:2001) shown in JIS.

Here, the correspondence table in Figure 7 shows a reference length for measuring the value Ra and the value Rz, as a value corresponding to the value Ra and the value Rz when the sectional profile curve is a nonperiodic waveform.

Estimation of the reference length allows a cutoff value λc to be estimated as the same value of the reference length.

The estimated cutoff value λc is set as a value to be used to calculate surface roughness and the like in the surface roughness calculating means 58.

Subsequently, in step S32 of Figure 3, the measurement conditions setting means 60 sets an sampling interval when the data acquiring means 52 acquires measurement data from the detector 24, on the basis of the cutoff value λc estimated in step S26 or step S30, and the correspondence table in Figure 8 shown in JIS (refer to JIS B 0651:2001).

The correspondence table in Figure 8 shows a value of a maximum sampling interval corresponding to the cutoff value λc. For example, the value of a maximum sampling interval corresponding to the cutoff value λc is directly set as a sampling interval. In addition, the maximum sampling interval in the correspondence table in Figure 8 is in terms of length (unit of length), and the sampling interval can be set as a rotation angle interval of a workpiece W in consideration of the diameter of the workpiece W.

Subsequently, in step S34 of Figure 3, while the stage 12 is rotated by the rotational driving unit 11, measurement data is acquired by the data acquiring means 52 in accordance with the measurement conditions set in steps S18 and S32, and is stored in the data storage means 54 as the measurement data on the surface roughness measurement.

That is, the data acquiring means 52 samples displacement data from the detector 24 at the sampling interval set in step S32 when a rotation angle of the workpiece W is within the measurement range (rotation angle range) set in step S18.

As described above, the stage 12 may be rotated under control by the data processing unit 50 of the rotational driving unit 11 (motor) and so on, or may be manually rotated.

Subsequently, in step S36 of Figure 3, the surface roughness calculating means 58 calculates values related to surface roughness of the workpiece W on the basis of the measurement data on the surface roughness measurement stored in the data storage means 54 in step S34.

That is, the surface roughness calculating means 58 creates a roughness curve by extracting only roughness components from the sectional profile curve of the workpiece W, indicated by the measurement data for surface roughness measurement stored in the data storage means 54, through a high-pass filter of the cutoff value λc set in step S26 or S30. Then, the value Ra indicating an arithmetic mean roughness, the value Rz indicating a ten-point mean roughness, the value RSm indicating a mean length of roughness curve elements, and the like are calculated, on the basis of the roughness curve and the sampling interval estimated in step S26 or S30.

The data storage means 54 then stores the calculation results described above as measurement result data on the surface roughness measurement.

Here, the value Ra, the value Rz, and the value RSm, which have been calculated above, are compared with the ranges of the value Ra and the value Rz in Figure 7 and the value RSm in Figure 6 which are corresponding to the estimated reference length. If the calculated values do not match with the corresponding ranges, the sampling interval is changed and calculation of the value Ra, the value Rz, and the value RSm is repeated again, until the calculated values match with the corresponding ranges. However, detailed description is omitted, here.

Up to this point, the surface roughness measurement is finished.

Subsequently, in step S38 of Figure 3, the result information creating means 62 creates a measurement result image to output (display) information on measurement results of the roundness measurement and the surface roughness measurement to a monitor or the like, on the basis of the measurement data and the measurement result data on the roundness measurement and the surface roughness measurement (calculation results) stored in the data storage means 54. Then, the measurement result image is output to the output means 72. The data storage means 54 stores the measurement data and the measurement result data on the roundness measurement and the surface roughness measurement as one associated information item, in one data file.

Figure 9 shows an example of the measurement result image. As shown in Figure 9, the measurement result image includes a first region 80 where a measurement result of the roundness measurement is displayed, and a second region 82 where measurement results of the surface roughness measurement are displayed. In the first region 80, the sectional profile curve of the workpiece W is displayed based on the measurement data on the roundness measurement. In addition, in the first region 80, the value P-P, the value P, the value V, and the value Pc are displayed as measurement result data. Further, the measurement ranges of the surface roughness measurement are indicated on the sectional profile curve of the workpiece W. The example of Figure 9 shows that three measurement ranges A, B, and C are set.

Meanwhile, in the second region 82, measurement data on surface roughness measurement is displayed for each of the measurement ranges A, B, and C in a graph form in which the horizontal axis represents a rotation angle and the vertical axis represents displacement. In addition, for each of the measurement ranges A, B, and C, a value Ra and a value Rz, for example, are displayed as measurement result data.

According to the shape measuring device 1 described above, because surface roughness measurement can be performed using a measurement result of roundness measurement in accordance with appropriate measurement conditions, a workload of the measurement is reduced and the measurement is performed in accordance with the appropriate measurement conditions without depending on operator's experience.

In addition, because data on roundness measurement and surface roughness measurement for one workpiece W is stored in one data file in association with each other, the data management can be easily performed.

Further, an operator can easily designate only a portion for which the operator wants to have its surface roughness, as a measurement range of surface roughness measurement by referring to measurement data on roundness measurement, and thus the measurement can be efficiently performed.

For example, some cases require evaluation of abrasion on the outer periphery of a columnar workpiece W to be rotated inside a cylindrical body 86 as illustrated in Figure 10. In these cases, when only surface roughness measurement is performed without performing roundness measurement, it is impossible to previously determine what portion is a projecting portion to be brought into contact with the cylindrical body 86. Thus, the surface roughness measurement needs to be performed throughout the entire outer periphery (360 degrees) of the workpiece W as illustrated in Figure 11, thereby taking a long time.

Meanwhile, roundness measurement needs a shorter measurement time than that of surface roughness measurement. When the roundness measurement is performed before the surface roughness measurement like the present embodiment, it is possible to know projecting portions 88A, 88B, and 88C of the workpiece W to be brought into contact with the cylindrical body 86, without taking a long time. Thus, the surface roughness measurement can be performed only for the projecting portions 88A, 88B, and 88C by designating the projecting portions as measurement ranges, instead of designating the entire outer periphery as a measurement range. This enhances efficiency of the measurement.

Subsequently, a second embodiment of a shape measuring device capable of performing roundness measurement and surface roughness measurement will be described.

Figure 12 is a front view illustrating a shape measuring device 100 according to the second embodiment. In Figure 12, a component having an identical or similar function to that of the shape measuring device 1 in Figure 1 is designated by the same reference numeral as in Figure 1, and only differences from the shape measuring device 1 in Figure 1 will be described.

In the shape measuring device 100 in Figure 12, a carriage 16 is provided with: the detector supporting mechanism 13 including the radial moving arm 18, the turning arm 20, and the detector holder 22; and a detector supporting mechanism 113 which is configured similarly to the detector supporting mechanism 13. The detector supporting mechanism 113 includes a radial moving arm 118, a turning arm 120, and a detector holder 122. The detector holder 122 of the detector supporting mechanism 113 supports a detector 124 including a detector body 124A and a stylus 124B.

Accordingly, the two detectors 24 and 124 are disposed in the radial direction (X-axis direction).

Then, a detector for roundness measurement is attached as the one detector 24, and a detector for surface roughness measurement is attached as the other detector 124. The detectors 24 and 124 are different in that a curvature radius of a tip ball (tip) of the stylus 24B of the detector 24 is larger than a curvature radius of a tip ball (tip) of the stylus 124B of the detector 124, as with the embodiment described above.

According to the shape measuring device 100, the stylus 24B of the detector 24 and the stylus 124B of the detector 124 are disposed opposite to each other across the center axis of a workpiece W disposed substantially coaxially with a rotation axis (θ-axis) of the stage 12, as illustrated in Figure 13. The detectors are brought into contact with the outer peripheral surface of the workpiece W at opposite positions apart by 180 degrees of a rotation angle from each other (an opposite position in the circumferential direction).

When the stage 12 is rotated around the θ-axis by one turn to rotate the workpiece W by one turn, measurement data (displacement data) on roundness measurement is acquired from the detector 24 as illustrated in Part (A) in Figure 14, and measurement data (displacement data) on surface roughness measurement is acquired from the detector 124 as illustrated in Part (B) in Figure 14. The measurement data from each of the detectors 24 and 124 is simultaneously acquired by data acquiring means in a data processing unit similar to the data processing unit 50 of the embodiment described above, and stored in data storage means. Then, roundness calculating means and surface roughness calculating means calculate roundness and surface roughness,
respectively.

A sampling interval to be used when sampling the displacement data (detection signal) from the detector 24 and measurement data acquired by the sampling are the same as those in roundness measurement in the embodiment described above. Then, a sampling interval to be used when sampling displacement data from the detector 124 and measurement data acquired by the sampling are the same as those in surface roughness measurement in the embodiment described above when the entire outer periphery (a rotation angle range for 360 degrees) is designated as a measurement range.

In this configuration, as illustrated in Figures 14(A) and 14(B), disturbance signals V1 and V2 showing opposite displacement directions (outward and inward in the radial direction) appear in two directions different from each other by 180 degrees around the center axis of the workpiece W in corresponding measurement data on roundness measurement and measurement data on surface roughness measurement, when a disturbance (e.g., a shake of the workpiece W) occurs during acquisition of the measurement data.

Thus, in comparison between measurement data on roundness measurement and measurement data on surface roughness measurement, when the measurement data on roundness measurement and the measurement data on surface roughness measurement include signals having the same form and indicating opposite displacement directions at positions having phase difference by 180 degrees from each other, as illustrated in Figure 14(C), it is possible to determine that the signals are disturbance signals V1 and V2 caused by a disturbance.

When the disturbance signals V1 and V2 occur, measurement data in portions corresponding to the disturbance signals V1 and V2 is corrected by using another measurement data, or is simply eliminated and interpolated by measurement data with an appropriate value. As a result, it is possible to acquire measurement data on roundness measurement and measurement data on surface roughness measurement in which the disturbance signals V1 and V2 are eliminated, as illustrated in Figures 14(D) and 14(E).

This processing can be performed in the processing means (e.g., data acquiring means 52) in the data processing unit 50 shown in the embodiment described above.

This enables accurate measurement of roundness and surface roughness to be performed by one measurement.

In the embodiment described above, a high-pass filter is used to acquire a roughness curve by eliminating undulation components and the like from the measurement data on surface roughness measurement when measurement data on surface roughness measurement as illustrated in Figure 15(B) and measurement data on roundness measurement as illustrated in Figure 15(C) are acquired for a workpiece W with a sectional profile curve as illustrated in Figure 15(A).

Besides this, because the measurement data on roundness measurement illustrated in Figure 15(C) approximates to undulation components in the measurement data on surface roughness measurement, a roughness curve may be acquired by eliminating undulation components derived from the measurement data on roundness measurement, from the measurement data on surface roughness measurement, as illustrated in Figure 15(D). While Figure 15(B) shows a case of acquiring measurement data on surface roughness measurement for the entire outer periphery, a roughness curve can be acquired in like manner even when measurement data is acquired for only a partial rotation angle range.

Even in the shape measuring device 100 according to the second embodiment, it is possible appropriately use technical matters described for the shape measuring device 1 illustrated in Figure 1 and the like. For example, it is also effective for the shape measuring device 100 of the second embodiment to store measurement data and measurement result data on roundness measurement and surface roughness measurement of one workpiece W as one associated information item included in one data file, in data storage
means.

In addition, the shape measuring device 100 of the second embodiment does not necessarily perform elimination of a disturbance signal V1 from measurement data on roundness measurement and elimination of a disturbance signal V2 from measurement data on surface roughness measurement by the processing means described above. The shape measuring device 100 of the second embodiment may be configured to determine whether or not the elimination is to be performed depending on a level of each of disturbance signals V1 and V2.

For example, as illustrated in Figure 16, when disturbance signals V1 and V2 occur in measurement data on both roundness measurement and surface roughness measurement, respectively (YES in step S100), the processing means determines whether the disturbance signals V1 and V2 are not larger than a predetermined threshold value, (step S101). When the disturbance signals V1 and V2 are larger than the predetermined threshold value (NO in step S101), the processing means eliminates the disturbance signals V1 and V2 from both the measurement data (step S102). Meanwhile, when the disturbance signals are not larger than the threshold value, the processing means does not eliminate the disturbance signals V1 and V2 from both the measurement data (YES in step S101).

### Reference Signs List

W ... workpiece, λc ... cutoff value, 1, 100 ... shape measuring device, 12 ... stage, 13, 113 ... detector supporting mechanism, 24, 124 ... detector, 24B, 124B ... stylus, 48 ... rotation angle detection means, rotation angle detector, 50 ... data processing unit, 52 ... data acquiring means, 54 ... data storage means, 56 ... roundness calculating means, 58 ... calculating means, 60 ... measurement conditions setting means, 62 ... result information creating means, 70 ... input means, 72 ... output means.

## Claims

1. A shape measuring device (100) for measuring a measuring object (W) having a columnar or cylindrical shape, comprising:
a rotational moving unit (11) configured to rotate the measuring object (W) relative to a first measurement unit (24) and a second measurement unit (124);
the first measurement unit (24) configured to perform roundness measurement of the rotating measuring object (W); and
the second measurement unit (124) configured to perform surface roughness measurement of the measuring object (W),
wherein the first measurement unit (24) and the second measurement unit (124) are opposed to each other centering on a center axis of the rotation of the measuring object (W), to detect an occurrence of a disturbance signal caused by a disturbance,
the shape measuring device (100) further being configured such that the roundness measurement by the first measurement unit (24) and the surface roughness measurement by the second measurement unit (124) are simultaneously performed,
the first measurement unit (24) is configured to perform the roundness measurement in a state where the first measurement unit is in contact with the measuring object (W) through a first stylus (24B) while being relatively rotated in the circumferential direction of the measuring object, based on detection signals acquired by detecting displacement of the first stylus,
the second measurement unit (124) is configured to perform the surface roughness measurement at a position opposite to a contact position between the first stylus and the measuring object in the circumferential direction, in a state where the second measurement unit is in contact with the measuring object through a second stylus (124B) while being relatively rotated in the circumferential direction of the measuring object, based on detection signals acquired by detecting displacement of the second stylus, and
**characterized in that** the shape measuring device further comprises:
processing means configured to eliminate a disturbance signal (V1, V2) caused by a disturbance from the detection signals of the first measurement unit and the detection signals of the second measurement unit, based on comparison between the detection signals of the first measurement unit and the detection signals of the second measurement unit, and
undulation component elimination means configured to eliminate undulation component from the measurement result of the second measurement unit (124).

2. The shape measuring device (100) according to claim 1, further comprising rotation angle detection means (48) configured to detect a rotation angle of the measuring object (W).

3. The shape measuring device (100) according to claim 2, wherein acquisition of a measurement result of the first measurement unit (24) and acquisition of a measurement result of the second measurement unit (124) are performed simultaneously based on a detection result of the rotation angle detecting means (48).

4. The shape measuring device (100) according to any one of claims 1 to 3, wherein the first measurement unit (24) and the second measurement unit (124) are disposed on positions which are opposed by 180 degrees centering on the center axis.

5. The shape measuring device according to claim 1, wherein
the processing means is configured to eliminate the disturbance signal (V1, V2) when the disturbance signal is larger than a predetermined threshold value, and is configured not to eliminate the disturbance signal when the disturbance signal is not larger than the predetermined threshold value.

6. The shape measuring device according to claim 1 or 5, wherein
a curvature radius of a tip of the first stylus (24B) in the first measurement unit (24) is larger than a curvature radius of a tip of the second stylus (124B) in the second measurement unit (124).

7. The shape measuring device according to claims 1, 5 or 6, further comprising a data storage means configured to store one data file, wherein
data on the roundness measurement acquired by the first measurement unit (24) and data on the surface roughness measurement acquired by the second measurement unit (124) are stored in the one data file.

8. A shape measuring method of measuring a measuring object (W) having a columnar or cylindrical shape, comprising:
a rotational moving step of rotating the measuring object (W) relative to a first measurement unit (24) and a second measurement unit (124);
a first measurement step of performing roundness measurement of the rotating measuring object (W) by the first measurement unit (24); and
a second measurement step of performing surface roughness measurement of the measuring object (W) by the second measurement unit (124),
wherein the first measurement unit (24) and the second measurement unit (124) are opposed to each other centering on a center axis of the rotation of the measuring object (W), to detect an occurrence of a disturbance signal caused by a disturbance,
the roundness measurement and the surface roughness measurement are simultaneously performed,
the first measurement unit (24) performs the roundness measurement in a state where the first measurement unit is in contact with the measuring object (W) through a first stylus (24B) while being relatively rotated in the circumferential direction of the measuring object, based on detection signals acquired by detecting displacement of the first stylus,
the second measurement unit (124) performs the surface roughness measurement at a position opposite to a contact position between the first stylus and the measuring object in the circumferential direction, in a state where the second measurement unit is in contact with the measuring object through a second stylus (124B) while being relatively rotated in the circumferential direction of the measuring object, based on detection signals acquired by detecting displacement of the second stylus, and
**characterized in that** the shape measuring method further comprises:
a processing step for eliminating a disturbance signal (V1, V2) caused by a disturbance from the detection signals of the first measurement unit and the detection signals of the second measurement unit, based on comparison between the detection signals of the first measurement unit and the detection signals of the second measurement unit, and
undulation component elimination step for eliminating undulation component from the measurement result of the second measurement unit (124).

## Patentansprüche

1. Formmessvorrichtung (100) zum Messen eines Messobjektes (W) mit einer säulenförmigen oder zylindrischen Form, die umfasst:
eine rotierende Bewegungseinheit (11), die konfiguriert ist, um das Messobjekt (W) relativ zu einer ersten Messeinheit (24) und einer zweiten Messeinheit (124) zu drehen:
die erste Messeinheit (24), die konfiguriert ist, um eine Rundheitsmessung des rotierenden Messobjektes (W) durchzuführen; und
die zweite Messeinheit (124), die konfiguriert ist, um eine Oberflächenrauheitsmessung des Messobjektes (W) durchzuführen,
wobei die erste Messeinheit (24) und die zweite Messeinheit (124) einander gegenüberliegen, wobei sie auf einer Rotationsmittelachse des Messobjektes (W) zentriert sind, um ein Auftreten eines durch eine Störung verursachten Störsignals zu detektieren, wobei die Formmesseinrichtung (100) des Weiteren so konfiguriert ist, dass die Rundheitsmessung durch die erste Messeinheit (24) und die Oberflächenrauheitsmessung durch die zweite Messeinheit (124) gleichzeitig durchgeführt werden,
die erste Messeinheit (24) konfiguriert ist, um die Rundheitsmessung in einem Zustand durchzuführen, in dem sich die erste Messeinheit mit dem Messobjekt (W) durch einen ersten Stift (248) in Kontakt befindet, während es in Umfangsrichtung des Messobjektes auf der Basis von Detektionssignalen relativ gedreht wird, die durch das Detektieren der Verschiebung des ersten Stiftes erfasst wurden,
die zweite Messeinheit (124) konfiguriert ist, um die Oberflächenrauheitsmessung an einer Position, die einer Kontaktposition zwischen dem ersten Stift und dem Messobjekt in der Umfangsrichtung gegenüber liegt, in einem Zustand durchzuführen, in dem sich die zweite Messeinheit über einen zweiten Stift (124B) mit dem Messobjekt in Kontakt befindet, während es in der Umfangsrichtung des Messobjektes auf der Basis von Detektionssignalen relativ gedreht wird, die durch Detektieren einer Verschiebung des zweiten Stiftes erfasst wurden, und
**dadurch gekennzeichnet, dass** die Formmessvorrichtung des Weiteren umfasst:
eine Verarbeitungseinrichtung, die konfiguriert ist, um ein durch eine Störung von den Detektionssignalen der ersten Messeinheit und den Detektionssignalen der zweiten Messeinheit verursachtes Störsignal (V1, V2) auf der Basis des Vergleiches zwischen den Detektionssignalen der ersten Messeinheit und den Detektionssignalen der zweiten Messeinheit zu eliminieren, und
eine Wellenformkomponenten-Eliminierungseinheit, die konfiguriert ist, um eine Wellenformkomponente aus dem Messergebnis der zweiten Messeinheit (124) zu eliminieren.

2. Formmessvorrichtung (100) nach Anspruch 1, die des Weiteren eine Drehwinkeldetektionseinrichtung (48) umfasst, die konfiguriert sind, um einen Drehwinkel des Messobjektes (W) zu detektieren.

3. Formmessvorrichtung (100) nach Anspruch 2, wobei das Erfassen eines Messergebnisses der ersten Messeinheit (24) und das Erfassen eines Messergebnisses der zweiten Messeinheit (124) gleichzeitig auf der Basis eines Detektionsergebnisses der Drehwinkeldetektionseinrichtung (48) durchgeführt werden.

4. Formmessvorrichtung (100) nach einem der Ansprüche 1 bis 3, wobei die erste Messeinheit (24) und die zweite Messeinheit (124) an Positionen angeordnet sind, die sich um 180 Grad zentriert auf der Mittelachse gegenüberliegen.

5. Formmessvorrichtung nach Anspruch 1, wobei
die Verarbeitungseinrichtung konfiguriert ist, um das Störsignal (V1, V2) zu eliminieren, wenn das Störsignal größer ist als ein vorgegebener Schwellenwert, und konfiguriert ist, um das Störsignal nicht zu eliminieren, wenn das Störsignal nicht größer ist als der vorgegebene Schwellenwert.

6. Formmessvorrichtung nach Anspruch 1 oder 5, wobei
ein Krümmungsradius einer Spitze des ersten Stiftes (24B) in der ersten Messeinheit (24) größer ist als ein Krümmungsradius einer Spitze des zweiten Stiftes (124B) in der zweiten Messeinheit (124).

7. Formmessvorrichtung nach den Ansprüchen 1, 5 oder 6, die des Weiteren eine Datenspeichereinrichtung umfasst, die konfiguriert ist, um eine Datei zu speichern, wobei
Daten über die von der ersten Messeinheit (24) erfassten Rundheitsmessung und Daten über die von der zweiten Messeinheit (124) erfassten Oberflächenrauheitsmessung in der einen Datei gespeichert werden.

8. Formmessverfahren zum Messen eines Messobjektes (W) mit einer säulenförmigen oder zylindrischen Form, das umfasst:
einen rotierenden Bewegungsschritt zum Drehen des Messobjektes (W) relativ zu einer ersten Messeinheit (24) und einer zweiten Messeinheit (124);
einen ersten Messschritt zum Durchführen einer Rundheitsmessung des sich drehenden Messobjektes (W) durch die erste Messeinheit (24) und
einen zweiten Messschritt zum Durchführen einer Oberflächenrauheitsmessung des Messobjektes (W) durch die zweite Messeinheit (124),
wobei die erste Messeinheit (24) und die zweite Messeinheit (124) einander gegenüberliegen, wobei sie auf einer Rotationsmittelachse des Messobjektes (W) zentriert sind, um ein Auftreten eines durch eine Störung verursachten Störsignals zu detektieren,
wobei die Rundheitsmessung und die Oberflächenrauheitsmessung gleichzeitig durchgeführt werden,
wobei die erste Messeinheit (24) die Rundheitsmessung in einem Zustand durchführt, in dem sich die erste Messeinheit über einen ersten Stift (248) mit dem Messobjekt (W) in Kontakt befindet, während es in Umfangsrichtung des Messobjektes auf der Basis von Detektionssignalen relativ gedreht wird, die durch das Detektieren der Verschiebung des ersten Stiftes erfasst wurden,
die zweite Messeinheit (124) die Oberflächenrauheitsmessung an einer Position, die einer Kontaktposition zwischen dem ersten Stift und dem Messobjekt in Umfangsrichtung gegenüberliegt, in einem Zustand durchführt, in dem sich die zweite Messeinheit (1248) über einen zweiten Stift mit dem Messobjekt in Kontakt befindet, während es in Umfangsrichtung des Messobjektes auf der Basis von Detektionssignalen relativ gedreht wird, die durch das Detektieren der Verschiebung des zweiten Stiftes erfasst wurden, und
**dadurch gekennzeichnet, dass** das Formmessverfahren des Weiteren umfasst:
einen Verarbeitungsschritt zum Eliminieren eines durch eine Störung verursachten Störsignals (V1, V2) aus den Detektionssignalen der ersten Messeinheit und den Detektionssignalen der zweiten Messeinheit auf der Basis des Vergleiches zwischen den Detektionssignalen der ersten Messeinheit und den Detektionssignalen der zweiten Messeinheit, und
einen Wellenformkomponenten-Eliminierungsschritt zum Eliminieren der Wellenformkomponente aus dem Messergebnis der zweiten Messeinheit (124).

## Revendications

1. Dispositif de mesure de forme (100) pour mesurer un objet de mesure (W) ayant une forme de colonne ou cylindrique, comprenant :
une unité de déplacement en rotation (11) configurée pour faire tourner l'objet de mesure (W) par rapport à une première unité de mesure (24) et à une seconde unité de mesure (124) ;
la première unité de mesure (24) configurée pour effectuer une mesure de rondeur de l'objet de mesure en rotation (W) ; et
la seconde unité de mesure (124) configurée pour effectuer une mesure de rugosité de surface de l'objet de mesure (W),
dans lequel la première unité de mesure (24) et la seconde unité de mesure (124) sont opposées l'une à l'autre, en étant centrées sur un axe central de la rotation de l'objet de mesure (W), pour détecter une occurrence d'un signal de perturbation provoqué par une perturbation,
le dispositif de mesure de forme (100) étant en outre configuré de sorte que la mesure de rondeur par la première unité de mesure (24) et la mesure de rugosité de surface par la seconde unité de mesure (124) sont effectuées simultanément,
la première unité de mesure (24) est configurée pour effectuer la mesure de rondeur dans un état dans lequel la première unité de mesure est en contact avec l'objet de mesure (W) par l'intermédiaire d'un premier stylet (24B) tout en étant mis en rotation de manière relative dans la direction circonférentielle de l'objet de mesure, basé sur des signaux de détection acquis en détectant un déplacement du premier stylet,
la seconde unité de mesure (124) est configurée pour effectuer la mesure de rugosité de surface à une position opposée à une position de contact entre le premier stylet et l'objet de mesure dans la direction circonférentielle, dans un état dans lequel la seconde unité de mesure est en contact avec l'objet de mesure à travers un second stylet (124B) tout en étant mis en rotation de manière relative dans la direction circonférentielle de l'objet de mesure, sur la base de signaux de détection acquis en détectant un déplacement du second stylet, et
**caractérisé en ce que** le dispositif de mesure de forme comprend en outre :
des moyens de traitement configurés pour éliminer un signal de perturbation (V1, V2) provoqué par une perturbation des signaux de détection de la première unité de mesure et des signaux de détection de la seconde unité de mesure, sur la base d'une comparaison entre les signaux de détection de la première unité de mesure et les signaux de détection de la seconde unité de mesure, et
des moyens d'élimination de composante d'ondulation configurés pour éliminer la composante d'ondulation du résultat de mesure de la seconde unité de mesure (124).

2. Dispositif de mesure de forme (100) selon la revendication 1, comprenant en outre des moyens de détection d'angle de rotation (48) configurés pour détecter un angle de rotation de l'objet de mesure (W).

3. Dispositif de mesure de forme (100) selon la revendication 2, dans lequel l'acquisition d'un résultat de mesure de la première unité de mesure (24) et l'acquisition d'un résultat de mesure de la seconde unité de mesure (124) sont effectuées simultanément sur la base d'un résultat de détection des moyens de détection d'angle de rotation (48).

4. Dispositif de mesure de forme (100) selon l'une quelconque des revendications 1 à 3, dans lequel la première unité de mesure (24) et la seconde unité de mesure (124) sont disposées sur des positions qui sont opposées de 180 degrés en étant centrées sur l'axe central.

5. Dispositif de mesure de forme selon la revendication 1, dans lequel
les moyens de traitement sont configurés pour éliminer le signal de perturbation (V1, V2) lorsque le signal de perturbation est supérieur à une valeur de seuil prédéterminée, et configurés pour ne pas éliminer le signal de perturbation lorsque le signal de perturbation n'est pas supérieur à la valeur de seuil prédéterminée.

6. Dispositif de mesure de forme selon la revendication 1 ou 5, dans lequel un rayon de courbure d'une extrémité du premier stylet (24B) dans la première unité de mesure (24) est supérieur au rayon de courbure d'une extrémité du second stylet (124B) dans la seconde unité de mesure (124).

7. Dispositif de mesure de forme selon la revendication 1, 5 ou 6, comprenant en outre des moyens de stockage de données configurés pour stocker un fichier de données, dans lequel
des données concernant la mesure de rondeur acquises par la première unité de mesure (24) et des données concernant la mesure de rugosité de surface acquises par la seconde unité de mesure (124) sont stockées dans le fichier de données.

8. Procédé de mesure de forme pour mesurer un objet de mesure (W) ayant une forme cylindrique ou de colonne, comprenant :
une étape de déplacement en rotation consistant à mettre en rotation l'objet de mesure (W) par rapport à une première unité de mesure (24) et à une seconde unité de mesure (124) ;
une première étape de mesure consistant à effectuer une mesure de rondeur de l'objet de mesure en rotation (W) par la première unité de mesure (24) ; et
une seconde étape de mesure consistant à effectuer une mesure de rugosité de surface de l'objet de mesure (W) par la seconde unité de mesure (124),
dans lequel la première unité de mesure (24) et la seconde unité de mesure (124) sont opposées l'une à l'autre, en étant centrées sur un axe central de la rotation de l'objet de mesure (W), pour détecter une occurrence d'un signal de perturbation provoqué par une perturbation,
la mesure de rondeur et la mesure de rugosité de surface sont effectuées simultanément,
la première unité de mesure (24) effectue la mesure de rondeur dans un état dans lequel la première unité de mesure est en contact avec l'objet de mesure (W) par l'intermédiaire d'un premier stylet (24B) tout en étant mis en rotation de manière relative dans la direction circonférentielle de l'objet de mesure, sur la base de signaux de détection acquis en détectant un déplacement du premier stylet,
la seconde unité de mesure (124) effectue la mesure de rugosité de surface à une position opposée à une position de contact entre le premier stylet et l'objet de mesure dans la direction circonférentielle, dans un état dans lequel la seconde unité de mesure est en contact avec l'objet de mesure à travers le second stylet (124B) tout en étant mis en rotation de manière relative dans la direction circonférentielle de l'objet de mesure, sur la base de signaux de détection acquis en détectant un déplacement du second stylet, et
**caractérisé en ce que** le procédé de mesure de forme comprend en outre :
une étape de traitement pour éliminer un signal de perturbation (V1, V2) provoqué par une perturbation des signaux de détection de la première unité de mesure et des signaux de détection de la seconde unité de mesure, sur la base d'une comparaison entre les signaux de détection de la première unité de mesure et les signaux de détection de la seconde unité de mesure, et
une étape d'élimination de composante d'ondulation pour éliminer une composante d'ondulation du résultat de mesure de la seconde unité de mesure (124).
